# EUROPEAN PATENT APPLICATION

(11) **EP 4 629 330 A1**
(43) Date of publication of application: **08.10.2025**
(21) Application number: 23897465.3
(22) Date of filing: 14.11.2023
(51) Int. Cl.: H01M 4/38, H01M 4/36

(54) **NEGATIVE ELECTRODE ACTIVE MATERIAL FOR NONAQUEOUS ELECTROLYTE SECONDARY BATTERIES, AND NONAQUEOUS ELECTROLYTE SECONDARY BATTERY**

(30) Priority: 30.11.2022 JP 2022192245
(71) Applicant: Panasonic Intellectual Property Management Co., Ltd., Kadoma-shi, Osaka 571-0057 (JP)
(72) Inventor: JIN, Takuya, Kadoma-shi, Osaka 571-0057 (JP)
(74) Representative: Eisenführ Speiser
(86) International application number: PCT/JP2023/040865
(87) International publication number: WO 2024/116814

(57) **Abstract**

A negative electrode active material for nonaqueous electrolyte secondary battery according to one embodiment of the present invention is composed of composite particles (30), each of which comprises a sodium aluminate phase (31) that contains Na and Al, silicon phases (32) that are dispersed in the sodium aluminate phase (31), and a conductive layer (34) that is formed on the surface of a base particle (33) which is composed of the sodium aluminate phase (31) and the silicon phases (32).

## Description

### TECHNICAL FIELD

The present disclosure relates to a negative electrode active material for non-aqueous electrolyte secondary battery and a non-aqueous electrolyte secondary battery using the negative electrode active material.

### BACKGROUND

In recent years, non-aqueous electrolyte secondary batteries such as lithium ion batteries have been widely used in applications requiring high capacity, such as in-vehicle applications and power storage applications. The negative electrode active material, which is a main component of the negative electrode, is one of the important factors in achieving an increase in battery capacity, and various studies have therefore been conducted on negative electrode active materials. In such studies, materials containing silicon (or Si-containing materials) have attracted attention as negative electrode active materials having a high theoretical capacity density.

As examples of the above-noted Si-containing materials, there are known, among others, a material in which nanosilicon is dispersed in a SiO₂ phase (hereinafter referred to as "SiOx"), and a material in which nanosilicon is dispersed in a lithium silicate phase represented by Li_{2z}SiO_{2+z} (where 0 < z < 2) (hereinafter referred to as "LSX") (for details of LSX, see, for example, Patent Literature 1).

### CITATION LIST

### PATENT LITERATURE

PATENT LITERATURE 1: PCT International Publication No. WO 2016/35290

### SUMMARY

In comparison to SiOx, LSX has a smaller irreversible capacity and a better initial charge-discharge efficiency. However, the lithium silicate phase in LSX has low alkali resistance and may as yet cause side reactions with Li ions during initial charging, so that there is a need for further improvement in the initial charge-discharge efficiency.

The present inventors have succeeded in reducing side reactions at an initial stage of charging and improving the charge-discharge efficiency by using, as the negative electrode active material, a material in which nanosilicon is dispersed in a highly alkali-resistant lithium aluminate phase. However, this has created a new problem in that, in comparison to LSX, voids are more likely to occur in the interior of particles, which results in low durability (or poor cycle characteristic). It is considered that when a large number of voids are present inside the particles of the negative electrode active material, a collapse of the particle structure occurs starting from the voids due to expansion and contraction of the particles during charging and discharging, and this results in a decrease in durability.

A negative electrode active material for non-aqueous electrolyte secondary battery according to the present disclosure is a composite particle including a sodium aluminate phase containing Na and Al, and a silicon phase dispersed in the sodium aluminate phase.

A non-aqueous electrolyte secondary battery according to the present disclosure includes a positive electrode, a negative electrode, and a non-aqueous electrolyte, and the negative electrode contains the above-described negative electrode active material.

The negative electrode active material according to the present disclosure enables to provide a non-aqueous electrolyte secondary battery having a high capacity and high durability. Further, a non-aqueous electrolyte secondary battery using the negative electrode active material according to the present disclosure has a higher initial charge-discharge efficiency than, for example, a battery using LSX.

### BRIEF DESCRIPTION OF DRAWINGS

FIG. 1 is a cross-sectional view of a non-aqueous electrolyte secondary battery according to an example embodiment.
FIG. 2 is a diagram showing a cross section of a particle of a negative electrode active material according to an example embodiment.

### DESCRIPTION OF EMBODIMENTS

As described above, a composite material in which nanosilicon is dispersed in a lithium aluminate phase has higher alkali resistance and a better initial charge-discharge efficiency compared to LSX, but is more susceptible to occurrence of voids inside the particles as compared to LSX. It is considered that when the porosity of the active material particles is high, a collapse of the particle structure occurs starting from the voids due to expansion and contraction of the particles during charging and discharging, and this results in a decrease in durability.

The present inventors have conducted intensive studies to solve the above problems, and found as a result that voids inside the particles can be reduced by using a sodium aluminate phase containing Na as the phase for dispersing nanosilicon. By reducing the porosity of the active material particles, the collapse of the particle structure associated with charging and discharging is inhibited, and durability is improved. It was found that a sodium aluminate phase has better sinterability than a lithium aluminate phase, and enables to obtain a material with low porosity even when heat-treated at a relatively low temperature.

Example embodiments of a negative electrode active material for non-aqueous electrolyte secondary battery according to the present disclosure and a non-aqueous electrolyte secondary battery using the negative electrode active material will now be described in detail by reference to the drawings. Configurations obtained by selectively combining the constituent elements of a plurality of embodiments and variants described below are included within the scope of the present disclosure.

In the embodiments described below, a non-aqueous electrolyte secondary battery 10 in the form of a cylindrical battery in which a spiral-type electrode assembly 14 is housed in a bottomed cylindrical outer can 16 will be referred to by way of example. However, the outer casing of the battery is not limited to a cylindrical outer can. Other embodiments of the non-aqueous electrolyte secondary battery according to the present disclosure include a rectangular battery having a rectangular outer can, a coin-shaped battery having a coin-shaped outer can, and a pouch-type battery having an outer casing composed of a laminate sheet including a metal layer and a resin layer. Furthermore, the electrode assembly is not limited to being of a spiral type, and may be a laminate-type electrode assembly formed by alternately laminating a plurality of positive electrodes and a plurality of negative electrodes with interposed separators.

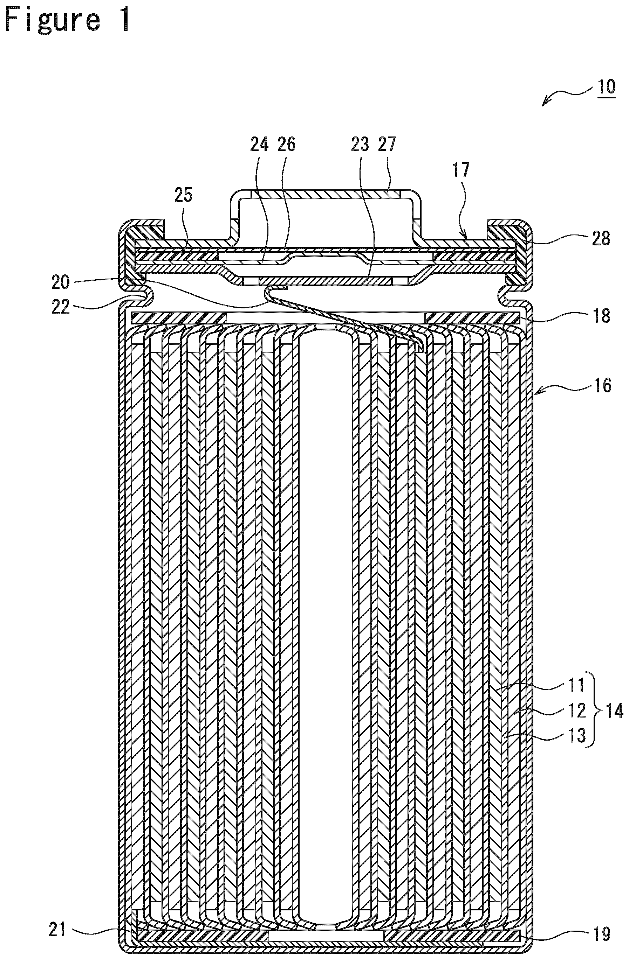

FIG. 1 is a diagram schematically illustrating an axial cross section of a non-aqueous electrolyte secondary battery 10 according to an example embodiment. As shown in FIG. 1, the non-aqueous electrolyte secondary battery 10 comprises a spiral-type electrode assembly 14, a non-aqueous electrolyte, and an outer can 16 that houses the electrode assembly 14 and the non-aqueous electrolyte. The electrode assembly 14 comprises a positive electrode 11, a negative electrode 12, and a separator 13, and has a spiral structure formed by spirally winding the positive electrode 11 and the negative electrode 12 with the separator 13 interposed. The outer can 16 is a bottomed cylindrical metal container having an opening at one axial end, and the opening of the outer can 16 is closed by a sealing assembly 17. In the following, for convenience of explanation, the side of the battery toward the sealing assembly 17 will be referred to as "upper", and the side toward the bottom of the outer can 16 will be referred to as "lower".

The non-aqueous electrolyte has ionic conductivity (e.g., lithium-ion conductivity). The non-aqueous electrolyte may be either a liquid electrolyte (or electrolyte solution) or a solid electrolyte.

The liquid electrolyte (or electrolyte solution) contains a non-aqueous solvent and an electrolyte salt dissolved in the non-aqueous solvent. As the non-aqueous solvent, for example, esters, ethers, nitriles, amides, a mixed solvent containing two or more of the foregoing, and the like are used. Examples of the non-aqueous solvent include ethylene carbonate (EC), ethyl methyl carbonate (EMC), dimethyl carbonate (DMC), diethyl carbonate (DEC), and a mixed solvent containing the foregoing solvents. The non-aqueous solvent may contain a halogen-substituted product (such as fluoroethylene carbonate) obtained by substituting at least part of hydrogen atoms in the above solvents with halogen atoms such as fluorine. As the electrolyte salt, for example, a lithium salt such as LiPF₆ is used.

As the solid electrolyte, for example, a solid or gel polymer electrolyte, an inorganic solid electrolyte, or the like is used. The polymer electrolyte contains, for example, a lithium salt and a matrix polymer, or alternatively contains a non-aqueous solvent, a lithium salt, and a matrix polymer. As the matrix polymer, for example, a polymer material that absorbs a non-aqueous solvent and forms a gel is used. As the polymer material, for example, a fluororesin, acrylic resin, polyether resin, or the like is used. As the inorganic solid electrolyte, for example, a material known for use in all-solid-state lithium ion secondary batteries and the like (e.g., an oxide-based solid electrolyte, a sulfide-based solid electrolyte, a halide-based solid electrolyte, or the like) is used.

The positive electrode 11, the negative electrode 12, and the separator 13, which constitute the electrode assembly 14, are all long strip-shaped members, and are alternately laminated in the radial direction of the electrode assembly 14 by being wound in a spiral shape. The negative electrode 12 is formed to have a size slightly larger than the positive electrode 11 in order to prevent lithium deposition. That is, the negative electrode 12 is formed to be longer than the positive electrode 11 in the lengthwise direction and in the widthwise direction (or the shorter direction). The separator 13 is formed to have a size slightly larger than at least the positive electrode 11, and, for example, two sheets of the separator are arranged so as to sandwich the positive electrode 11. The electrode assembly 14 has a positive electrode lead 20 connected to the positive electrode 11 by welding or the like, and a negative electrode lead 21 connected to the negative electrode 12 by welding or the like.

The positive electrode 11 comprises a positive electrode core and a positive electrode mixture layer provided on the positive electrode core. As the positive electrode core, it is possible to use a foil of a metal such as aluminum or an aluminum alloy that is stable in the potential range of the positive electrode 11, a film having such metal provided on its surface layer, and the like. The positive electrode mixture layer contains a positive electrode active material, a conductive agent, and a binder, and is preferably formed on both sides of the positive electrode core in areas other than an exposed portion to which the positive electrode lead 20 is connected. The positive electrode 11 can be produced by, for example, applying a positive electrode mixture slurry containing the positive electrode active material, the conductive agent, the binder, and the like onto the positive electrode core, drying the applied coating, and then compressing the coating to thereby form a positive electrode mixture layer on both sides of the positive electrode core.

The positive electrode mixture layer contains, as the positive electrode active material, a lithium metal composite oxide in particulate form. The lithium metal composite oxide is a composite oxide containing a metal element such as Co, Mn, Ni, or Al in addition to Li. The metal element constituting the lithium metal composite oxide is, for example, at least one selected from Mg, Al, Ca, Sc, Ti, V, Cr, Mn, Fe, Co, Ni, Cu, Zn, Ga, Ge, Y, Zr, Sn, Sb, W, Pb, and Bi. Among these, at least one selected from Co, Ni, and Mn is preferably contained.

Examples of the conductive agent contained in the positive electrode mixture layer include carbon materials, including carbon black such as acetylene black and Ketjenblack, graphite, carbon nanotubes (CNT), carbon nanofibers, and graphene. Examples of the binder contained in the positive electrode mixture layer include fluororesins such as polytetrafluoroethylene (PTFE) and polyvinylidene fluoride (PVDF), polyacrylonitrile (PAN), polyimides, acrylic resins, and polyolefins. These resins may be used in combination with carboxymethyl cellulose (CMC) or a salt thereof, polyethylene oxide (PEO), and the like.

The negative electrode 12 comprises a negative electrode core and a negative electrode mixture layer formed on the negative electrode core. As the negative electrode core, it is possible to use a foil of a metal such as copper or a copper alloy that is stable in the potential range of the negative electrode 12, a film having such metal provided on its surface layer, and the like. The negative electrode mixture layer contains a negative electrode active material, a binder, and, as necessary, a conductive agent, and is preferably formed on both sides of the negative electrode core in areas other than an exposed portion to which the negative electrode lead 21 is welded. The negative electrode 12 can be produced by applying a negative electrode mixture slurry containing the negative electrode active material, the binder, and the like onto the surfaces of the negative electrode core, drying the applied coating, and then compressing the coating to thereby form a negative electrode mixture layer on both sides of the negative electrode core.

As the binder contained in the negative electrode mixture layer, fluororesins, PAN, polyimides, acrylic resins, polyolefins, and the like can be used as in the case of the positive electrode 11, but styrene-butadiene rubber (SBR) is preferably used. Further, the negative electrode mixture layer preferably contains CMC or a salt thereof, polyacrylic acid (PAA) or a salt thereof, polyvinyl alcohol (PVA), or the like. Among the foregoing, use of SBR in combination with CMC or a salt thereof or PAA or a salt thereof is preferable. The negative electrode mixture layer may contain a conductive agent such as CNT.

As the separator 13, a porous sheet having ion permeability and insulating property is used. Specific examples of the porous sheet include a microporous thin film, a woven fabric, and a non-woven fabric. As the material of the separator 13, polyolefins such as polyethylene and polypropylene, cellulose, and the like are suitable. The separator 13 may have either a single-layer structure or a multi-layer structure. Further, on the surface of the separator 13, there may be formed a highly heat-resistant resin layer made of aramid resin or the like.

A filler layer containing an inorganic filler may be formed at the interface between the separator 13 and at least one of the positive electrode 11 and the negative electrode 12. Examples of the inorganic filler include oxides and phosphate compounds containing metal elements such as Ti, Al, Si, and Mg. The filler layer can be formed by applying a slurry containing the filler onto the surface of the positive electrode 11, the negative electrode 12, or the separator 13.

Above and below the electrode assembly 14, insulating plates 18, 19 are provided respectively. In the example shown in FIG. 1, the positive electrode lead 20 extends through a through hole in the insulating plate 18 and toward the sealing assembly 17, while the negative electrode lead 21 extends outside the insulating plate 19 and toward the bottom of the outer can 16. The positive electrode lead 20 is connected by welding or the like to the lower surface of an internal terminal plate 23 of the sealing assembly 17, and a cap 27, which is the top plate of the sealing assembly 17 electrically connected to the internal terminal plate 23, serves as the positive electrode terminal. The negative electrode lead 21 is connected by welding or the like to the inner surface of the bottom of the outer can 16, and the outer can 16 serves as the negative electrode terminal.

A gasket 28 is provided between the outer can 16 and the sealing assembly 17 to ensure airtightness inside the battery. The outer can 16 has a grooved portion 22 formed thereon, where a part of the side wall projects inward, and which supports the sealing assembly 17. The grooved portion 22 is preferably formed in an annular shape along the circumferential direction of the outer can 16, and supports the sealing assembly 17 on its upper surface. The sealing assembly 17 is fixed to an upper part of the outer can 16 by means of the grooved portion 22 and an opening end of the outer can 16 which is crimped to the sealing assembly 17.

The sealing assembly 17 has a structure obtained by laminating, in order from the electrode assembly 14 side, the internal terminal plate 23, a lower vent member 24, an insulating member 25, an upper vent member 26, and the cap 27. Each of the members constituting the sealing assembly 17 has, for example, a disk shape or a ring shape, and the respective members except the insulating member 25 are mutually electrically connected. The lower vent member 24 and the upper vent member 26 are connected to each other at their central portions, and the insulating member 25 is interposed between peripheral portions of these vent members. When the battery internal pressure increases due to abnormal heat generation, the lower vent member 24 deforms and ruptures in a manner pushing up the upper vent member 26 toward the cap 27, and the current path between the lower vent member 24 and the upper vent member 26 is thereby cut off. When the internal pressure increases further, the upper vent member 26 ruptures, and gas is discharged from an opening in the cap 27.

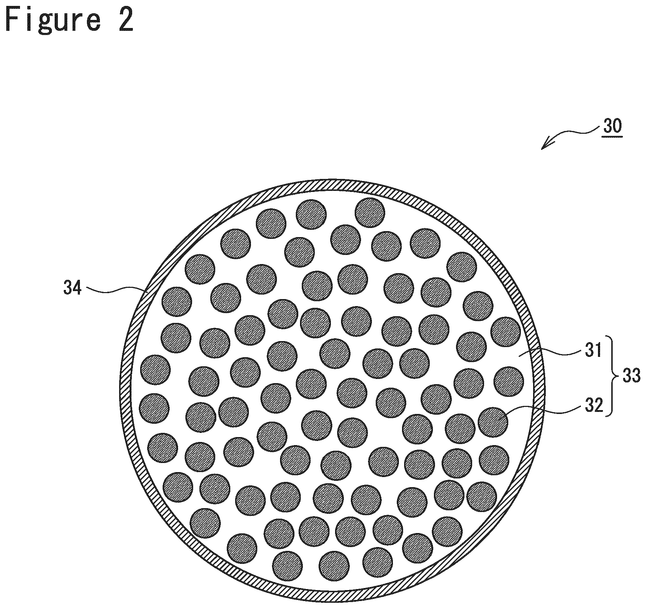

The negative electrode active material will now be described in detail by reference to FIG. 2.

FIG. 2 is a schematic diagram showing a cross section of a composite particle 30 according to an example embodiment. The negative electrode 12 contains at least the composite particles 30 as the negative electrode active material. The negative electrode active material may be composed of substantially only the composite particles 30, but preferably contains the composite particles 30 and a carbon material. Combined use of the composite particles 30 and a carbon material as the negative electrode active material facilitates simultaneously achieving both high capacity and excellent cycle characteristic. When the composite particles 30 are used in combination with a carbon material, the content of the composite particles 30 is preferably greater than or equal to 1 mass% and less than or equal to 50 mass%, more preferably greater than or equal to 2 mass% and less than or equal to 30 mass%, and particularly preferably greater than or equal to 3 mass% and less than or equal to 20 mass%, based on the total mass of the negative electrode active material.

Examples of the carbon material include graphite, graphitizable carbon (soft carbon), and non-graphitizable carbon (hard carbon). Among these, graphite is preferable, which has excellent charge-discharge stability and small irreversible capacity. The graphite may be any of artificial graphite such as massive artificial graphite (MAG) and graphitized mesophase carbon microbeads (MCMB), and natural graphite such as flake graphite, massive graphite, and amorphous graphite.

As shown in FIG. 2, each composite particle 30 includes a sodium aluminate phase 31 and a silicon phase 32 dispersed in the sodium aluminate phase 31. Further, the composite particle 30 preferably includes a conductive layer 34 formed on the surface of a base particle 33 composed of the sodium aluminate phase 31 and the silicon phase 32. The base particle 33 has a sea-island structure in which the fine silicon phase 32 is dispersed in a matrix composed of the sodium aluminate phase 31. As will be described in detail later, the sodium aluminate phase 31 contains Na and Al. By using the sodium aluminate phase 31 containing Na as the phase for dispersing nanosilicon, voids inside the particles are reduced, and the cycle characteristic is significantly improved.

The composite particles 30 may substantially not contain lithium silicate or SiO₂. While the composite particles 30 may contain lithium silicate and SiO₂, the amount thereof is preferably small. The total content of lithium silicate and SiO₂ in the composite particles 30 is, for example, less than or equal to 10 mass%.

The content of Al (MAl) based on the total mass of elements other than oxygen that constitute the sodium aluminate phase 31 and the silicon phase 32 (i.e., the base particles 33) is preferably greater than or equal to 4.0 mass% and less than or equal to 20.0 mass%, and more preferably greater than or equal to 8.0 mass% and less than or equal to 15.0 mass%. Further, the content of Na (MNa) based on the total mass of elements other than oxygen that constitute the base particles 33 is preferably greater than or equal to 0.5 mass% and less than or equal to 20.0 mass%, more preferably greater than or equal to 1.0 mass% and less than or equal to 15.0 mass%, and particularly preferably greater than or equal to 2.0 mass% and less than or equal to 10.0 mass%. MNa may be greater than or equal to 3.0 mass% and less than or equal to 8.0 mass%, greater than or equal to 3.0 mass% and less than or equal to 7.0 mass%, or greater than or equal to 3.5 mass% and less than or equal to 6.5 mass%.

When the Al content (MAl) and the Na content (MNa) are within the above ranges, a sodium aluminate phase having excellent stability and ionic conductivity is easily obtained. Here, the above-noted stability includes both chemical stability (or alkali resistance) and thermal stability. Furthermore, the intraparticle porosity is more effectively reduced, and improvement of the cycle characteristic is enhanced.

In terms of stability, ionic conductivity, reduction of porosity, and the like of the sodium aluminate phase 31, the ratio of the Na content to the Al content (MAl) is preferably greater than or equal to 0.1 and less than or equal to 2.0, more preferably greater than or equal to 0.15 and less than or equal to 1.5, and particularly preferably greater than or equal to 0.2 and less than or equal to 1.0. Further, the ratio (MO/MAl) of the O content (MO) to the Al content (MAl) is, for example, greater than or equal to 0.5 and less than or equal to 4.0.

The content of Si (MSi) based on the total mass of elements other than oxygen that constitute the base particles 33 is preferably greater than or equal to 50 mass% and less than or equal to 95 mass%, and more preferably greater than or equal to 70 mass% and less than or equal to 90 mass%. In that case, it is easy to simultaneously achieve both high capacity and high durability. The Si content (MSi) is mainly the amount of Si constituting the silicon phase 32.

In the sodium aluminate phase 31, a fine Al₂O₃ phase having high crystallinity may be dispersed. For example, the Al₂O₃ phase is distributed in island shapes in the matrix composed of the sodium aluminate phase 31. In that case, expansion and cracking of the sodium aluminate phase 31 resulting from expansion and contraction of the silicon phase 32 are easily suppressed, and improvement of the cycle characteristic is enhanced. When the Al₂O₃ phase is present, in an X-ray diffraction pattern of the composite particles obtained by X-ray diffraction measurement, a peak derived from the Al₂O₃ phase can be observed at 2θ = around 25.4°. The content of the Al₂O₃ phase in the composite particles 30 is, for example, less than or equal to 10 mass%.

The base particle 33 of each composite particle 30 has a sea-island structure in which the fine silicon phase 32 forming the island parts is dispersed in the sodium aluminate phase 31 forming the sea part. The sodium aluminate phase 31 has good ionic conductivity, and occlusion and release of Li ions by the silicon phase 32 are smoothly carried out via the sodium aluminate phase 31. Furthermore, the sodium aluminate phase 31 mitigates the influence of expansion and contraction of the silicon phase 32. The sodium aluminate phase 31 may be amorphous, in which case the influence of expansion and contraction of the silicon phase 32 can be more effectively mitigated.

In each composite particle 30, for example, a plurality of primary particles each including an sodium aluminate phase 31 and a silicon phase 32 are aggregated to form a secondary particle. The volume-based median diameter (D50) of the composite particles 30 (or secondary particles) is, for example, greater than or equal to 1 µm and less than or equal to 25 µm, and may be greater than or equal to 4 µm and less than or equal to 15 µm. In that case, stress caused by volume changes of the composite particles 30 during charging and discharging can be easily mitigated, and a good cycle characteristic can be easily obtained. In addition, the size of the surface area of the composite particles 30 becomes appropriate, and a decrease in capacity due to side reactions with the non-aqueous electrolyte is suppressed.

The volume-based median diameter (D50) of the composite particles 30 means a particle size at which, in a volume-based particle size distribution, the cumulative frequency from the smaller particle size end reaches 50 %. The particle size distribution of the composite particles 30 can be measured with a laser diffraction particle size distribution measuring device (e.g., MT3000II manufactured by MicrotracBEL Corp.) using water as the dispersion medium. In the case where the surface of the base particles 33 is covered with a conductive layer 34, the thickness of the conductive layer 34 is thin enough to not substantially affect the particle size of the composite particles 30, so that the particle size of the composite particles 30 including the conductive layer 34 may be regarded as the D50 of the composite particles 30.

The composite particles 30 can be taken out from a battery by the following method. First, a fully discharged battery is disassembled to take out the negative electrode, and the negative electrode is washed with anhydrous ethyl methyl carbonate or dimethyl carbonate to remove the non-aqueous electrolyte component. The negative electrode mixture layer is peeled off from the copper foil serving as the negative electrode core, and the mixture layer is pulverized in a mortar to obtain a sample powder. Next, the sample powder is dried in a dry atmosphere for 1 hour, and then immersed in gently boiling 6M hydrochloric acid for 10 minutes to remove elements other than those derived from the composite particles. Subsequently, the sample powder is washed with ion-exchanged water, filtered, and dried at 200 °C for 1 hour. After that, by heating at 900 °C in an oxygen atmosphere to eliminate the conductive layer 34, only the base particles 33 can be isolated. Here, a fully discharged state is a state in which the depth of discharge (DOD) is greater than or equal to 90 % (or the state of charge (SOC) is less than or equal to 10 %).

### [Sodium Aluminate Phase]

The sodium aluminate phase 31 is a phase composed of a composite oxide containing Na and Al. The alkali aluminate phase 31 contains Na in an amount of greater than or equal to 80 mass%, more preferably greater than or equal to 85 mass%, and particularly preferably greater than or equal to 90 mass% of the total mass of alkali metal element contained in the phase. An alkali metal element is an element belonging to Group 1 in the periodic table, and the sodium aluminate phase 31 may contain a small amount of at least one element selected from the group consisting of Li, K, Rb, Cs, and Fr.

However, from the perspective of improving the cycle characteristic by reducing the intraparticle porosity, it is preferable that the alkali aluminate phase 31 contains substantially only Na as the alkali metal element. The ratio (MNa/MAl) between the Na content (MNa) and the Al content (MLi), which are based on the total mass of elements other than oxygen that constitute the base particles 33, is preferably greater than or equal to 0.25 and less than or equal to 3.0. MNa/MAl is more preferably greater than or equal to 0.3 and less than or equal to 2.0, still more preferably greater than or equal to 0.35 and less than or equal to 1.5, and particularly preferably greater than or equal to 0.4 and less than or equal to 1.0. When MNa/MAl is within this range, the intraparticle porosity is more effectively reduced, and the cycle characteristic is significantly improved.

The sodium aluminate phase 31 may further contain another element M in addition to Na (or alkali metal element), Al, and O. An example of the element M is at least one selected from the group consisting of Ca, Mg, Zr, Fe, Si, B, P, and La. Among these, at least one of Si and B is preferable, and B is more preferable. In addition to Na, Al, and O, the sodium aluminate phase 31 may contain at least one of Si and B, or may contain substantially only B. By adding the element M, for example, stability and ionic conductivity of the sodium aluminate phase 31 are improved, and the porosity of the composite particles 30 can be further reduced.

The element M may constitute a compound. Depending on the type of the element M, the compound may be, for example, an oxide of the element M or an aluminate of the element M. The content of the element M based on the total amount of elements other than oxygen that constitute the base particles 33 is, for example, 1.0 mass% and less than or equal to 10.0 mass%. The sodium aluminate phase 31 may further contain trace amounts of elements such as chromium (Cr), nickel (Ni), manganese (Mn), copper (Cu), and molybdenum (Mo).

When the sodium aluminate phase 31 contains B, the ratio (MAl/MB) between the Al content (MAl) and the B content (MB), which are based on the total mass of elements other than oxygen that constitute the base particles 33, is preferably greater than or equal to 1.0 and less than or equal to 30, more preferably greater than or equal to 1.0 and less than or equal to 20, and particularly preferably greater than or equal to 1.0 and less than or equal to 10.0. When MAl/MB is within this range, reduction of the porosity becomes more notable.

In the composite particles 30, the intraparticle porosity before initial charging and discharging is preferably less than or equal to 25 %, and more preferably less than or equal to 20 %. The porosity means the proportion of voids 35 in particle cross sections of the composite particles 30, and is determined from a scanning electron microscope (SEM) image of the particle cross sections. The lower limit of the porosity is not particularly limited, and is, for example, 1 %. For example, the voids 35 are present approximately uniformly throughout the base particles 33. Each void 35 is small, and in the same manner as the silicon phase 32, a large number of voids 35 may be present by being dispersed throughout the sodium aluminate phase 31.

The porosity of the composite particles 30 is calculated by binarizing an SEM image of particle cross sections using an image analysis software (e.g., ImageJ) to extract regions of voids 35, and dividing the total area of the voids 35 by the total area of the particle cross sections. As will be described in detail later, the porosity of the composite particles 30 can be controlled by adjusting the firing temperature of the composite particles 30, the compressive force applied to the particles during firing, addition of the element M (particularly B), and the like.

The composite particles 30 have, for example, a Vickers hardness of greater than or equal to 300 HV. Since the conductive layer 34 has virtually no effect on the Vickers hardness, the Vickers hardness of the composite particles 30 and the Vickers hardness of the base particles 33 are substantially the same. When the composite particles 30 have a high Vickers hardness, volume changes of the silicon phase 32 during charging and discharging can be easily suppressed, and deterioration of the particle structure can be reduced. As a result, improvement of the cycle characteristic becomes more notable. The Vickers hardness of the composite particles 30 may be greater than or equal to 350 HV, greater than or equal to 400 HV, or greater than or equal to 500 HV.

The Vickers hardness of the composite particles 30 can be measured using a Vickers hardness tester. Specifically, the composite particles 30 are embedded in a thermosetting resin, and then polished with #400 abrasive paper to expose cross sections of the composite particles 30. The cross sections are further polished to a mirror finish using #2000 abrasive paper and by buffing. The Vickers hardness is measured under the conditions of a load of 1 kg and a dwell time of 15 seconds. The upper limit of the Vickers hardness of the composite particles 30 is not particularly limited, and is, for example, 1500 HV.

The contents of Na, Al, and the element M in the sodium aluminate phase 31 can be measured, for example, by analyzing a cross section of the negative electrode mixture layer. First, a fully discharged battery is disassembled to take out the negative electrode, and the negative electrode is washed with anhydrous ethyl methyl carbonate or dimethyl carbonate to remove the non-aqueous electrolyte component. After drying the negative electrode, a cross section of the negative electrode mixture layer is obtained using a cross section polisher (CP). Next, the cross section of the negative electrode mixture layer is observed using an SEM.

The content of each element in the sodium aluminate phase 31 is measured by any of the following techniques. Further, from the contents of the respective elements, the composition of the sodium aluminate phase 31 can be determined.

### [Energy Dispersive X-ray (EDX)]

From a backscattered electron image of the cross section of the negative electrode mixture layer, ten (10) composite particles 30 with a maximum particle diameter of greater than or equal to 5 µm are randomly selected, and on each of those particles, elemental mapping analysis is performed using EDX. Using an image analysis software, the occupying area of each target element is calculated. The magnification of observation is preferably within the range from 2,000 to 20,000 times. The measured occupying areas of the given element contained in the 10 particles are averaged. From the obtained average value, the content of the target element is calculated.

Desirable measurement conditions for the cross-sectional SEM-EDX analysis are as shown below.
Processing device: SM-09010 (cross section polisher) manufactured by JEOL
Processing condition: Acceleration voltage of 6 kV
Current value: 140 µA
Vacuum level: 1×10⁻³ to 2×10⁻³ Pa
Measuring device: Electron microscope SU-70 manufactured by HITACHI
Acceleration voltage during analysis: 10 kV
Field: Free mode
Probe current mode: Medium
Probe current range: High
Anode Ap.: 3
OBJ Ap.: 2
Analysis area: 1 µm square
Analysis software: EDAX Genesis
CPS: 20500
Lsec: 50
Time constant: 3.2

### [Auger Electron Spectroscopy (AES)]

From a backscattered electron image of the cross section of the negative electrode mixture layer, ten (10) composite particles 30 with a maximum particle diameter of greater than or equal to 5 µm are randomly selected, and on each of those particles, qualitative and quantitative elemental analysis is performed using an AES analyzer (e.g., JAMP-9510F manufactured by JEOL Ltd.). The measurement conditions may be, for example, an acceleration voltage of 10 kV, a beam current of 10 nA, and an analysis area of 20 µm ϕ. The content of each given element is calculated by averaging its contents in the 10 particles.

Here, the EDX analysis and the AES analysis are performed with respect to a region located inward by a distance of greater than or equal to 1 µm from the peripheral edge of the cross sections of the composite particles 30.

### [Inductively Coupled Plasma Atomic Emission Spectroscopy (ICP)]

A sample of the composite particles 30 is completely dissolved in a heated solution of acid (i.e., a mixed acid of hydrofluoric acid, nitric acid, and sulfuric acid), and carbon remaining in the solution is removed by filtration. The resulting filtrate is then analyzed by ICP to measure the spectral intensity of respective elements. Subsequently, calibration curves are prepared using commercially available standard solutions of the elements, and the contents of the elements contained in the composite particles 30 are calculated.

Quantitation of each element can also be performed by using an electron probe microanalyzer (EPMA), laser ablation ICP mass spectrometry (LA-ICP-MS), X-ray photoelectron spectroscopy (XPS), or the like. Further, as to the contents of the alkali metal elements, Al, and B contained in the composite particles 30, quantitative analysis may be performed in accordance with JIS R3105 (1995) (method for analysis of borosilicate glass). As to the Ca content, quantitative analysis may be performed in accordance with JIS R3101 (1995) (method for analysis of soda-lime glass).

The carbon content in the composite particles 30 can be measured using a carbon/sulfur analyzer (e.g., model EMIA-520 manufactured by Horiba, Ltd.). A sample is measured out onto a magnetic board, and a combustion accelerator is added thereto. The magnetic board is inserted into a combustion furnace heated to 1350 °C (with the carrier gas being oxygen), and the amount of carbon dioxide gas generated during combustion is detected by infrared absorption. A calibration curve is prepared using, for example, carbon steel (with a carbon content of 0.49 %) manufactured by Bureau of Analysed Samples Ltd., and the carbon content in the sample is calculated (a technique using combustion in a high-frequency induction heating furnace and infrared absorption).

The oxygen content in the composite particles 30 can be measured using an oxygen/nitrogen/hydrogen analyzer (e.g., model EGMA-830 manufactured by Horiba, Ltd.). A sample is placed in a Ni capsule, which is then placed, together with Sn pellets and Ni pellets that serve as flux, into a carbon crucible heated at an electric power of 5.75 kW, and released carbon monoxide gas is detected. A calibration curve is prepared using a standard sample Y₂O₃, and the oxygen content in the sample is calculated (a technique using inert gas fusion and non-dispersive infrared absorption).

The amount of Si constituting the silicon phase 32 in the composite particles 30 can be quantitated using Si-NMR. Desirable conditions for the Si-NMR measurement are as shown below.
Measuring device: Solid-state nuclear magnetic resonance spectrometer (INOVA-400) manufactured by Varian, Inc.
Probe: Varian 7 mm CPMAS-2
MAS: 4.2 kHz
MAS rate: 4 kHz
Pulse: DD (45° pulse + signal acquisition time 1H decoupling)
Repetition time: 1200 sec to 3000 sec
Observation width: 100 kHz
Observation center: Around -100 ppm
Signal acquisition time: 0.05 sec
Number of accumulations: 560
Sample amount: 207.6 mg

### [Silicon Phase]

The silicon phase 32 is a phase composed of Si alone, and repeatedly occludes and releases Li ions during charging and discharging of the battery. Capacitance is generated by a Faradaic reaction in which the silicon phase 32 is involved. The silicon phase 32 has a large capacity and therefore undergoes a large degree of expansion and contraction during charging and discharging. However, since the silicon phase 32 is dispersed in the sodium aluminate phase 31, stress caused by expansion and contraction of the silicon phase 32 is mitigated by the sodium aluminate phase 31.

The silicon phase 32 is composed of, for example, a plurality of crystallites. The crystallite size of the silicon phase 32 calculated by the Scherrer equation from the half-width of the diffraction peak of the Si(111) plane obtained by XRD measurement of the composite particles 30 (or base particles 33) is preferably less than or equal to 30 nm, more preferably less than or equal to 20 nm, and particularly preferably less than or equal to 15 nm. In that case, volume changes of the composite particles 30 caused by expansion and contraction of the silicon phase 32 during charging and discharging can be reduced, and improvement of the cycle characteristic becomes more notable.

The lower limit of the crystallite size of the silicon phase 32 is not particularly limited, and is, for example, 1 nm. An example of a suitable crystallite size of the silicon phase 32 is greater than or equal to 1 nm and less than or equal to 15 nm, and may be greater than or equal to 5 nm and less than or equal to 11 nm. When the crystallite size of the silicon phase 32 is greater than or equal to 1 nm, for example, the surface area of the silicon phase 32 can be kept small, so that deterioration of the silicon phase 32, which results in generation of irreversible capacity, is less likely to occur. When the crystallite size is less than or equal to 15 nm, expansion and contraction of the silicon phase 32 tend to become uniform, and stress generated in the composite particles 30 is effectively mitigated.

The silicon phase 32 is, for example, in particulate form at least before initial charging. The average particle size of the particulate silicon phase 32 is preferably less than or equal to 500 nm, more preferably less than or equal to 200 nm, and particularly preferably less than or equal to 50 nm. The average particle size of the silicon phase 32 after initial charging is preferably less than or equal to 400 nm, and more preferably less than or equal to 100 nm. By micronizing and dispersing the silicon phase 32, volume changes of the composite particles 30 during charging and discharging are reduced, and structural stability of the composite particles 30 is further improved. The average particle size of the silicon phase 32 is measured using a cross-sectional image of the composite particles 30 obtained by SEM. Specifically, the average particle size of the silicon phase 32 is determined by averaging the maximum particle diameters of arbitrary 100 particles of the silicon phase 32.

From the perspective of achieving a high capacity, the content of the silicon phase 32 in the composite particles 30 is preferably greater than or equal to 30 mass%, more preferably greater than or equal to 35 mass%, and particularly preferably greater than or equal to 55 mass%. From the perspective of ensuring a good cycle characteristic, the upper limit of the content of the silicon phase 32 is preferably less than or equal to 95 mass%, more preferably less than or equal to 75 mass%, and particularly preferably less than or equal to 70 mass%. In that case, the amount of silicon phase 32 exposed at the surface of the composite particles 30 without being covered by the sodium aluminate phase 31 is reduced, and side reactions between the non-aqueous electrolyte and the silicon phase 32 are also suppressed.

### [Conductive Layer]

As described above, the composite particles 30 preferably have a conductive layer 34 formed on the surface of the base particles 33 composed of the sodium aluminate phase 31 and the silicon phase 32. The conductive layer 34 covers at least part of the surface of the base particles 33, and preferably covers substantially the entire surface of the base particles 33. The conductive layer 34 is a thin film layer containing a conductive material, and improves electrical conductivity of the composite particles 30. The thickness of the conductive layer 34 is preferably thin enough to not affect the particle size of the composite particles 30. In consideration of ensuring electrical conductivity and diffusivity of Li ions, the thickness of the conductive layer 34 is preferably greater than or equal to 1 nm and less than or equal to 200 nm, and more preferably greater than or equal to 5 nm and less than or equal to 100 nm. The thickness of the conductive layer 34 can be measured by observing cross sections of the composite particles using a SEM or a transmission electron microscope (TEM).

The conductive material constituting the conductive layer 34 is preferably a conductive carbon material. As the carbon material, it is possible to use amorphous carbon, graphite (such as natural graphite, artificial graphite, and graphitized mesophase carbon), soft carbon, hard carbon, and the like. Among these, amorphous carbon is preferrable for its easiness of being formed into a thin conductive layer 34 covering the surface of the base particles 33. Examples of amorphous carbon include carbon black, baked pitch, coke, and activated carbon.

### [Method for Manufacturing Composite Particles]

The composite particles 30 are manufactured, for example, by a manufacturing method including first to fifth steps described below.
First step: A step of obtaining a raw material sodium aluminate (hereinafter referred to as "raw material aluminate").
Second step: A step of forming a composite with the raw material aluminate and raw material silicon such that a silicon phase 32 is dispersed in a sodium aluminate phase 31, and thereby obtaining a composite intermediate.
Third step: A step of heat-treating the composite intermediate to obtain a sintered product containing the sodium aluminate phase 31 and the silicon phase 32 dispersed in the sodium aluminate phase 31.
Fourth step: A step of pulverizing the sintered product to obtain composite particles 30.
Fifth step: A step of forming a conductive layer 34 on the surface of base particles 33 composed of the sodium aluminate phase 31 and the silicon phase 32.

### [First Step]

The first step includes, for example, a step of mixing together an aluminum compound, a sodium compound, and, as necessary, a compound containing an element M to obtain a mixture, and a step of firing the mixture to obtain a raw material aluminate. The firing is carried out, for example, in an oxidizing atmosphere. The firing temperature is preferably higher than or equal to 400 °C and lower than or equal to 1200 °C, and more preferably higher than or equal to 700 °C and lower than or equal to 1100 °C.

Examples of the aluminum compound include aluminum oxide, aluminum hydroxide, and aluminum carbonate. A single type of aluminum compound may be used alone, or two or more types may be used in combination. Examples of the sodium compound include sodium carbonate, sodium oxide, sodium hydroxide, and sodium hydride.

As the compound containing an element M, for example, a boron compound is preferably used. Examples of the boron compound include boron oxide, boric acid, borax, and sodium tetraborate. A single type of boron compound may be used alone, or two or more types may be used in combination.

In the first step, part of the aluminum compound that did not reacted with the compounds containing alkali metal elements during the production of the raw material aluminate can remain in the raw material aluminate. When the amount of the aluminum compound used is excessive relative to the compounds containing alkali metal elements, some of the aluminum compound may remain. When the aluminum compound remaining in the raw material aluminate is Al₂O₃, an Al₂O₃ phase dispersed in the sodium aluminate phase 31 may be formed in the finally-obtained composite particles 30.

### [Second Step]

In the second step, for example, a mixture of the raw material aluminate and raw material silicon is pulverized by being subjected to shear force, and a composite intermediate in micronized form is obtained. For example, there may be used a method in which the raw material aluminate and the raw material silicon are mixed in a predetermined mass ratio, and the mixture is micronized using a pulverizing device such as a ball mill.

As the raw material silicon, coarse silicon particles having an average particle size in the range from several µm to several tens of µm may be used. The silicon particles are preferably prepared such that the crystallite size of the silicon phase 32 calculated by the Scherrer equation from the half-width of the diffraction peak attributed to the Si(111) plane in an XRD pattern becomes less than or equal to 15 nm. Alternatively, silicon nanoparticles and raw material aluminate nanoparticles may be synthesized and then mixed together without using a pulverizing device.

### [Third Step]

In the third step, for example, the micronized composite intermediate is fired while being subjected to pressure using a hot press or the like, and a sintered product is obtained. The pressure applied to the composite intermediate is, for example, greater than or equal to 100 MPa, and may be greater than or equal to 100 MPa and less than or equal to 300 MPa. With a higher pressure in the third step, the porosity of the composite particles 30 tends to become smaller. The firing of the composite intermediate is preferably carried out in an inert atmosphere (e.g., an atmosphere of argon, nitrogen, or the like). The firing conditions in the third step also affect the crystallites of the silicon phase 32, and in general, with a higher firing temperature, the crystallite size becomes larger.

An example of the firing temperature is higher than or equal to 450 °C and lower than or equal to 1000 °C. When the firing temperature is within this range, it is easy to form a structure in which a fine silicon phase 32 is dispersed in a sodium aluminate phase 31 having low crystallinity. At the above-described temperature, the raw material aluminate is stable and undergoes almost no reaction with silicon. The firing temperature is preferably higher than or equal to 550 °C and lower than or equal to 950 °C, and more preferably higher than or equal to 650 °C and lower than or equal to 900 °C. The firing time is, for example, more than or equal to 1 hour and less than or equal to 10 hours. In order to reduce the porosity to less than or equal to 25 %, the firing is preferably carried out at a temperature of higher than or equal to 650 °C.

### [Fourth Step]

The fourth step is a step of pulverizing the base particles 33 to achieve a desired particle size distribution. For example, the base particles 33 are pulverized such that the D50 is greater than or equal to 1 µm and less than or equal to 25 µm.

### [Fifth Step]

The manufacturing method of the composite particles 30 according to the present embodiment includes a fifth step of forming a conductive layer 34 on the surface of the base particles 33. As described above, the conductive material constituting the conductive layer 34 is preferably a conductive carbon material. Example methods for coating the surface of the base particles 33 with a carbon material include a CVD method using a hydrocarbon gas such as acetylene or methane as the raw material, and a method in which coal pitch, petroleum pitch, phenolic resin, or the like is mixed with the base particles 33, heated, and carbonized. Alternatively, carbon black may be adhered to the surface of the base particles 33.

In the fifth step, for example, a mixture of the base particles 33 and a carbon material is heated in an inert atmosphere (e.g., an atmosphere of argon, nitrogen, or the like) at a temperature of higher than or equal to 700 °C and lower than or equal to 950 °C, and composite particles 30 in which a conductive layer 34 is formed on the surface of the base particles 33 are thereby obtained.

### EXAMPLES

While the present disclosure will now be further described using Examples, the present disclosure is not limited to these Examples.

### <Example 1>

### [Preparation of Composite Particles]

### (First Step)

Al₂O₃, Na₂CO₃, and B₂O₃ were mixed together, and the mixture was fired in air at 800 °C for 10 hours to obtain a raw material aluminate. In the first step, the mixing ratio of Al₂O₃, Na₂CO₃, and B₂O₃ was adjusted such that the constituent elements of the sodium aluminate phase had the element ratios shown in Table 1. Further, the raw material aluminate was pulverized to a D50 of 10 µm.

### (Second Step)

Raw material silicon (3N, with a D50 of 10 µm) and the raw material aluminate obtained in the first step were mixed together. In the second step, the mixing ratio of the raw material silicon and the raw material aluminate was adjusted such that the constituent elements of the composite particles had the element ratios shown in Table 1. The mixture was filled in a pot (made of stainless steel, with a volume of 500 mL) of a planetary ball mill (P-5 manufactured by Fritsch). 24 stainless steel balls (with a diameter of 20 mm) were placed in the pot, the lid was closed, and the mixture was subjected to pulverization processing in an inert atmosphere at 200 rpm for 50 hours.

### (Third Step)

The pulverized mixture obtained in the second step was taken out in an inert atmosphere, and was sintered in an inert atmosphere at 700 °C for 4 hours while being subjected to a pressure of 200 MPa using a hot press machine, and a sintered product of the mixture was thereby obtained.

### (Fourth Step)

The sintered product obtained in the third step was pulverized and passed through a 40 µm mesh, and there were obtained base particles in which a silicon phase was dispersed in a sodium aluminate phase.

### (Fifth Step)

Coal pitch (MCP250 manufactured by JFE Chemical Corporation) was mixed with the base particles obtained in the fourth step. This mixture was fired in an inert atmosphere at 800 °C for 5 hours to form a conductive layer containing a conductive carbon material on the surface of the base particles. The coating amount of the conductive layer was 5 mass% based on the total mass of the base particles and the conductive layer. After that, using a sieve, composite particles having a conductive layer and having a D50 of 5 µm were obtained.

In an XRD pattern of the above composite particles obtained by XRD measurement, peaks derived from the sodium aluminate phase and the silicon phase were confirmed. The crystallite size of the silicon phase in the composite particles as determined by the above-described method was 12 nm. Further, the contents of Na, Al, B, and Si based on the total mass of elements other than oxygen that constitute the sodium aluminate phase and the silicon phase were determined by the above-described method, and the measurement results were as shown in Table 1. Furthermore, the porosity of the composite material was determined by the above-described method, and the measurement result was as shown in Table 1.

### [Production of Negative Electrode]

As the negative electrode active material, a mixture of the above composite particles and graphite in a mass ratio of 5:95 was used. A negative electrode mixture slurry was prepared by adding water to a negative electrode mixture containing the negative electrode active material, Na salt of CMC, and SBR in a mass ratio of 97.5:1:1.5, and stirring the mixture. Next, the negative electrode mixture slurry was applied onto the surface of a negative electrode core made of copper foil. The applied coating was dried and then rolled, and a negative electrode having a negative electrode mixture layer with a density of 1.5 g/cm³ formed on both sides of the copper foil was thereby produced.

### [Production of Positive Electrode]

A positive electrode mixture slurry was prepared by adding N-methyl-2-pyrrolidone (NMP) to a positive electrode mixture containing lithium cobalt oxide, acetylene black, and PVDF in a mass ratio of 95:2.5:2.5, and stirring the mixture. Next, the positive electrode mixture slurry was applied onto the surface of a positive electrode core made of aluminum foil. The applied coating was dried and then rolled, and a positive electrode having a positive electrode mixture layer with a density of 3.6 g/cm³ formed on both sides of the aluminum foil was thereby produced.

### [Preparation of Non-Aqueous Electrolyte]

Into a mixed solvent obtained by mixing together ethylene carbonate (EC) and diethyl carbonate (DEC) in a volume ratio (at 25 °C) of 3:7, LiPF₆ was dissolved to a concentration of 1.0 mol/L, and a non-aqueous electrolyte was thereby prepared.

### [Production of Non-Aqueous Electrolyte Secondary Battery]

The positive electrode and the negative electrode each having a lead attached thereto were wound with an interposed separator to produce a spiral-type electrode assembly. The electrode assembly was inserted into an outer casing composed of an aluminum laminate film, and was vacuum dried at 105 °C for 2 hours. Subsequently, the non-aqueous electrolyte was injected therein, and the opening of the outer casing was sealed to obtain a non-aqueous electrolyte secondary battery.

### <Examples 2 to 5>

Composite particles were synthesized and a non-aqueous electrolyte secondary battery was produced in the same manner as in Example 1 except that, in the first step, the mixing ratio of Al₂O₃, Na₂CO₃, and B₂O₃ was adjusted such that the contents of the respective elements constituting the composite material had the values shown in Table 1.

### <Comparative Example 1>

Composite particles were synthesized and a non-aqueous electrolyte secondary battery was produced in the same manner as in Example 1 except that, in the first step, Li₂CO₃ was added instead of Na₂CO₃.

### <Comparative Example 2>

Composite particles were synthesized and a non-aqueous electrolyte secondary battery was produced in the same manner as in Comparative Example 1 except that, in the first step, SiO₂ was added instead of Al₂O₃, and B₂O₃ was not added.

### <Comparative Example 3>

Composite particles were synthesized and a non-aqueous electrolyte secondary battery was produced in the same manner as in Example 1 except that, in the first step, SiO₂ was added instead of Al₂O₃, and B₂O₃ was not added.

### [Evaluation of Capacity Retention Rate (Durability)]

In a temperature environment of 25 °C, each battery to be evaluated was charged at a constant current of 1 It (800 mA) until the voltage reached 4.2 V, and then charged at a constant voltage of 4.2 V until the current reached 1/20 It (40 mA). After a 10-minute rest, the battery was discharged at a constant current of 1 It (800 mA) until the voltage reached 2.75 V. This charging and discharging process was repeated for 100 cycles, and the capacity retention rate was calculated by dividing the discharge capacity in the 100th cycle by the discharge capacity in the first cycle. The results shown in Table 1 are values relative to the capacity retention rate of the battery of Comparative Example 1, which is assumed to be 100.

**[Table 1]**

| | Na mass% | Li mass% | Al mass% | B mass% | Si mass% | Na/Al | Al/B | Porosity % | Durability |
|---|---|---|---|---|---|---|---|---|---|
| Example 1 | 3.9 | 0 | 8.0 | 4.2 | 84.0 | 0.49 | 1.9 | 19 | 103 |
| Example 2 | 5.7 | 0 | 8.5 | 2.9 | 82.8 | 0.67 | 2.9 | 16 | 103 |
| Example 3 | 4.8 | 0 | 8.0 | 3.7 | 83.5 | 0.61 | 2.1 | 17 | 106 |
| Example 4 | 5.0 | 0 | 7.0 | 4.3 | 83.8 | 0.71 | 1.6 | 16 | 110 |
| Example 5 | 6.0 | 0 | 7.0 | 3.8 | 83.3 | 0.85 | 1.8 | 14 | 109 |
| Comparative Example 1 | 0 | 1.2 | 12.2 | 2.5 | 84.1 | - | 4.8 | 22 | 100 |
| Comparative Example 2 | 0 | 2.5 | 0 | 0 | 97.5 | - | - | 5 | 88 |
| Comparative Example 3 | 6.7 | 0 | 0 | 0 | 93.3 | - | - | 2 | 87 |

As shown in Table 1, all of the batteries of the Examples had a higher capacity retention rate and superior durability than the batteries of the Comparative Examples. That is, a composite material having a sodium aluminate phase as the phase for dispersing nanosilicon contributes more to improving durability in comparison to a composite material having, as the dispersing phase, a lithium aluminate phase (Comparative Example 1), a lithium silicate phase (Comparative Example 2), or a sodium silicate phase. In particular, when the ratio of the Na content to the Al content (MNa/MAl) is greater than or equal to 0.60 and less than or equal to 1.0, and more specifically greater than or equal to 0.65 and less than or equal to 0.90, reduction of the intraparticle porosity is notable, and durability is significantly improved.

The present disclosure is further illustrated by the following embodiments.

Configuration 1: A negative electrode active material for non-aqueous electrolyte secondary battery, which is a composite particle comprising: a sodium aluminate phase containing Na and Al; and a silicon phase dispersed in the sodium aluminate phase.

Configuration 2: The negative electrode active material for non-aqueous electrolyte secondary battery according to Configuration 1, wherein the sodium aluminate phase contains Na in an amount of greater than or equal to 80 mass% of a total mass of alkali metal element contained in the phase.

Configuration 3: The negative electrode active material for non-aqueous electrolyte secondary battery according to Configuration 1, wherein the sodium aluminate phase contains substantially only Na as alkali metal element.

Configuration 4: The negative electrode active material for non-aqueous electrolyte secondary battery according to any one of Configurations 1 to 3, wherein a ratio (MNa/MAl) between a Na content (MNa) and a Al content (MAl), which are based on a total mass of elements other than oxygen that constitute the sodium aluminate phase and the silicon phase, is greater than or equal to 0.25 and less than or equal to 3.0.

Configuration 5: The negative electrode active material for non-aqueous electrolyte secondary battery according to any one of Configurations 1 to 4, wherein the sodium aluminate phase further contains at least one of Si and B.

Configuration 6: The negative electrode active material for non-aqueous electrolyte secondary battery according to Configuration 5, wherein the sodium aluminate phase contains at least B, and a ratio (MAl/MB) between an Al content (MAl) and a B content (MB), which are based on a total mass of elements other than oxygen that constitute the sodium aluminate phase and the silicon phase, is greater than or equal to 1.0 and less than or equal to 30.

Configuration 7: The negative electrode active material for non-aqueous electrolyte secondary battery according to any one of Configurations 1 to 6, wherein the composite particle has an intraparticle porosity of less than or equal to 25 % before initial charging and discharging.

Configuration 8: The negative electrode active material for non-aqueous electrolyte secondary battery according to any one of Configurations 1 to 7, wherein the composite particle includes a conductive layer formed on a surface of a base particle composed of the sodium aluminate phase and the silicon phase.

Configuration 9: A non-aqueous electrolyte secondary battery, comprising a positive electrode, a negative electrode, and a non-aqueous electrolyte, wherein the negative electrode contains the negative electrode active material according to any one of Configuration 1 to 8.

### REFERENCE SIGNS LIST

10 non-aqueous electrolyte secondary battery; 11 positive electrode; 12 negative electrode; 13 separator; 14 electrode assembly; 16 outer can; 17 sealing assembly; 18, 19 insulating plate; 20 positive electrode lead; 21 negative electrode lead; 22 grooved portion; 23 internal terminal plate; 24 lower vent member; 25 insulating member; 26 upper vent member; 27 cap; 28 gasket; 30 composite particle; 31 sodium aluminate phase; 32 silicon phase; 33 base particle; 34 conductive layer.

## Claims

1. A negative electrode active material for non-aqueous electrolyte secondary battery, which is a composite particle comprising:
a sodium aluminate phase containing Na and Al; and
a silicon phase dispersed in the sodium aluminate phase.

2. The negative electrode active material for non-aqueous electrolyte secondary battery according to claim 1, wherein the sodium aluminate phase contains Na in an amount of greater than or equal to 80 mass% of a total mass of alkali metal element contained in the phase.

3. The negative electrode active material for non-aqueous electrolyte secondary battery according to claim 1, wherein the sodium aluminate phase contains substantially only Na as alkali metal element.

4. The negative electrode active material for non-aqueous electrolyte secondary battery according to claim 3, wherein a ratio (MNa/MAl) between a Na content (MNa) and a Al content (MAl), which are based on a total mass of elements other than oxygen that constitute the sodium aluminate phase and the silicon phase, is greater than or equal to 0.25 and less than or equal to 3.0.

5. The negative electrode active material for non-aqueous electrolyte secondary battery according to claim 1, wherein the sodium aluminate phase further contains at least one of Si and B.

6. The negative electrode active material for non-aqueous electrolyte secondary battery according to claim 5, wherein
the sodium aluminate phase contains at least B, and
a ratio (MAl/MB) between an Al content (MAl) and a B content (MB), which are based on a total mass of elements other than oxygen that constitute the sodium aluminate phase and the silicon phase, is greater than or equal to 1.0 and less than or equal to 30.

7. The negative electrode active material for non-aqueous electrolyte secondary battery according to claim 1, wherein the composite particle has an intraparticle porosity of less than or equal to 25 % before initial charging and discharging.

8. The negative electrode active material for non-aqueous electrolyte secondary battery according to claim 1, wherein the composite particle includes a conductive layer formed on a surface of a base particle composed of the sodium aluminate phase and the silicon phase.

9. A non-aqueous electrolyte secondary battery, comprising
a positive electrode, a negative electrode, and a non-aqueous electrolyte, wherein
the negative electrode contains the negative electrode active material for non-aqueous electrolyte secondary battery according to any one of claims 1 to 8.
